Europäisches Patentamt

European Patent Office

Office européen des brevets

(11) Publication number: **0 045 628**
**B1**

# (12) EUROPEAN PATENT SPECIFICATION

(45) Date of publication of patent specification: **10.10.84**

(51) Int. Cl.³: **F 16 L 13/02**

(21) Application number: **81303487.3**

(22) Date of filing: **30.07.81**

(54) **Internal pipeline delivery device.**

(30) Priority: **31.07.80 US 174289**

(43) Date of publication of application:
**10.02.82 Bulletin 82/06**

(45) Publication of the grant of the patent:
**10.10.84 Bulletin 84/41**

(84) Designated Contracting States:
**AT BE CH DE FR IT LI NL SE**

(56) References cited:
**DE-C- 660 158**
**FR-A-2 395 489**
**FR-A-2 434 330**

(73) Proprietor: **RAYCHEM CORPORATION**
**300 Constitution Drive**
**Menlo Park California 94025 (US)**

(72) Inventor: **White, Lawrence Joseph**
**590 Hazel Dell Way No.1**
**San Jose California 95129 (US)**

(74) Representative: **Jones, David Colin et al**
**RAYCHEM Intellectual Property Law**
**Department Swan House 37-39 High Holborn**
**London WC1 (GB)**

Courier Press, Leamington Spa, England.

## Description

The present invention relates to a device that is suitable for delivering a payload to a pre-determined location within a pipe.

In the manufacture or construction of reactors, pipes, valves, and other enclosed fluid-handling process equipment it is often necessary to employ welding operations to join component parts together. Where such equipment is designed to handle corrosive fluids, precautions must be taken to keep the fluids from contacting the equipment. As a result, individual components such as pipes may be coated on their interior surfaces to protect the surfaces from the action of the corrosive material. However, when the inner surface of the finished article is subjected to a welding procedure, the now inaccessible inner surface coating is generally damaged, either by the welding operation itself, or by removal prior to welding to prevent contamination to the weld area, thereby leaving an exposed area subject to corrosion. It is therefore highly desirable to find a means of protecting such an exposed area and further to find a means which may be inserted into the pipe section whilst it is accessible. To this end, an internal pipe protection device has been developed and is the subject of our copending and contemporaneously filed European Patent Application publication no. 0045629. The aforementioned device may be inserted into a pipe section before the welding of said section to an adjoining section. Subsequent to the welding procedure, and after the weld area has cooled, the pipe protection device may be positioned directly under the weld area and remotely activated to provide a protective lining for said exposed section.

The problem of moving such a pipe protection device or other similar device (hereafter referred to generally as a "payload") is to be solved by the present invention, which comprises a thermally activatable device for accurately delivering a payload to a pre-determined location within a pipe.

It is known from FR—A—2395489 that a device may be used for the movement of detectors through a pipe, the detectors being carried by means which are axially extensible through the pipe.

In accordance with the present invention, there is provided a device for operation within a pipe, comprising: carrier means for radially and axially supporting the payload; driver means connected to said carrier means for effecting movement of the carrier axially within the pipe, the driver means being axially extensible; support means connected to the driver means to support the driver means within the pipe; and thermally activatable trigger means connected to the driver means to actuate said driver means to move the carrier and deliver the payload to a predetermined location within the pipe.

The carrier means, driver means, support means and trigger means of the device may be arranged to be destructible after deliver of the payload to the pre-determined location within the pipe.

The driver means may comprise an expansible chamber and an energizing fluid source interconnected by said thermally activatable trigger means. Alternatively, the driver means may comprise a compressed spring-like member and the trigger means may comprise a compression retainer. The spring-like member may comprise a helical spring, or alternatively, it may comprise a sealed telescopic cylinder and complementary piston.

The device of the invention is of particular, but not exclusive, application where the payload requires more than just radial and axial support within the pipe, for example if it is necessary or desirable that the payload be sufficiently remote from a welding area in order to prevent its damage or premature activation.

Furthermore, the device can support and shield the payload, for example from the heat of welding and from wind forces within the pipe, until the device is thermally activated by the heating of the pipe in its vicinity, causing it to move the payload to the desired position, and align the payload for its operation.

Several embodiments of a remotely thermally activatable device, each in accordance with the present invention, will now be described, by way of example, with reference to the accompanying drawings, in which;

Figure 1 is a perspective view of one embodiment of the device with its payload, prior to activation;

Figure 2 is a perspective view of the device of Figure 1, with its payload, subsequent to activation;

Figure 3 is a full section view of the device of Figure 1, with its payload, positioned within a pipe prior to activation;

Figure 4 is a full section view similar to Figure 3 illustrating the device during its operation;

Figure 5 is a full section view similar to Figures 3 and 4 of the device after operation;

Figure 6 is a full section view similar to Figures 3, 4 and 5 subsequently to installation of the payload, illustrating the destructibility of the device;

Figure 7 is a partial cross sectional view of a thermally activated trigger of the device;

Figure 8 is a schematic cross-sectional view of a first alternative embodiment of the device; and

Figures 9 to 12 are schematic cross-sectional views of second to fifth alternative embodiments respectively of the device.

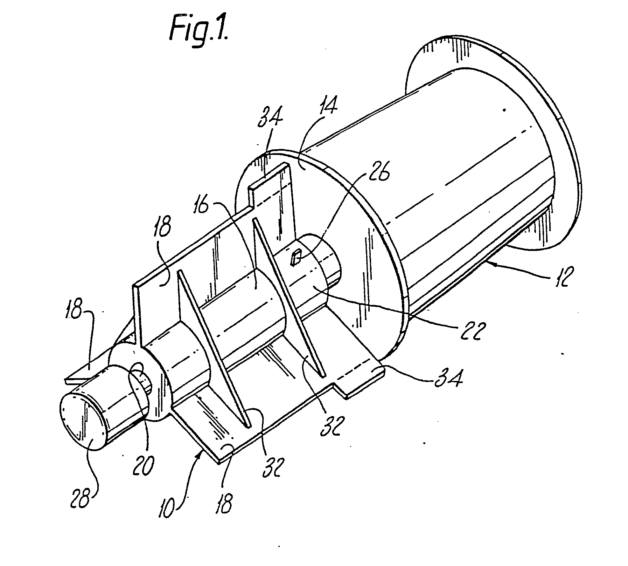

Referring to the drawings, Figure 1 illustrates the device generally at 10, carrying a payload referred to generally at 12. The device 10 comprises a carrier 14, a driver arrangement 16, a support arrangement 18, and a thermally activatable trigger.

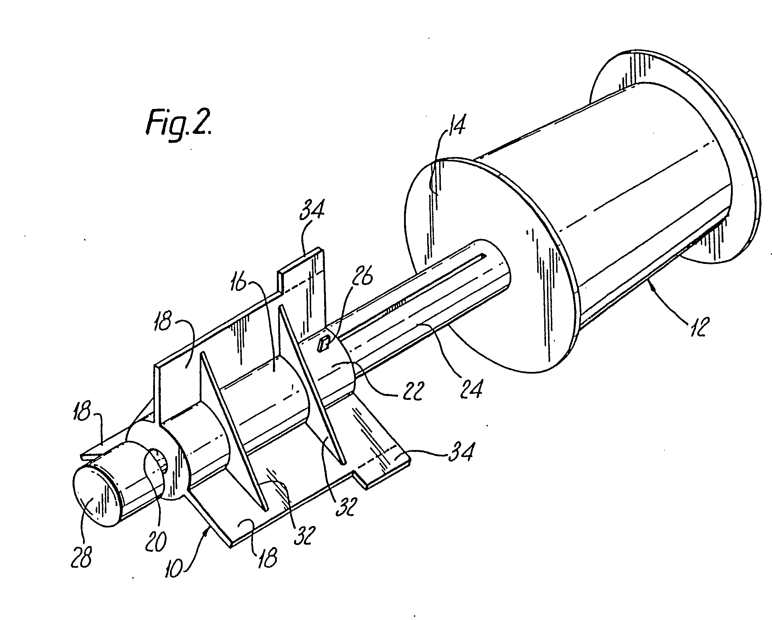

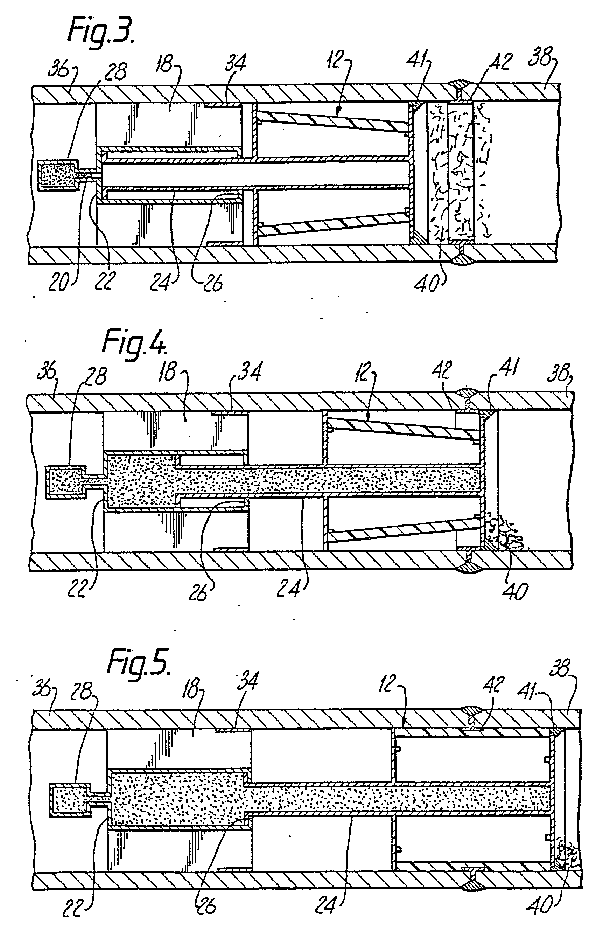

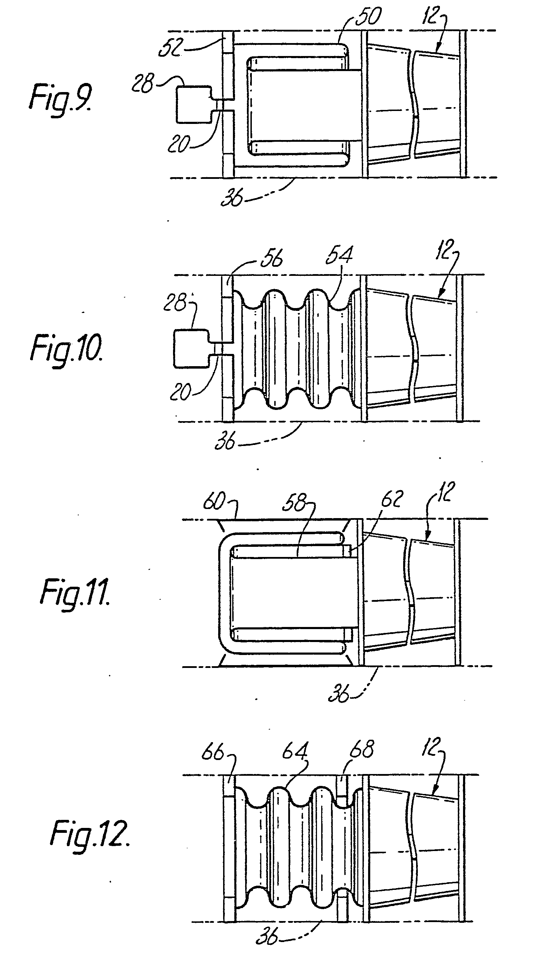

The driver arrangement 16 is connected to the carrier 14 such as to move the carrier axially to an extended position as shown in Figure 2. The driver arrangement 16 comprises a telescoping cylinder 22 and a piston 24. The extension of the piston 24 is limited by a stop 26, as can be more clearly seen in Figure 2. The stop 26 is shown in a more schematic form in Figures 3—6. The driver arrangement 16 is, therefore, basically an expansible chamber which in the preferred embodiment comprises the cylinder 22 and the piston 24. The driver arrangement 16 further comprises an energizing fluid source 28. In the preferred embodiment, this energizing fluid source 28 is a chamber containing a compressed gas, e.g. air. A blowing agent may be utilized within the chamber, where said agent releases a gas or vapour at a pre-determined temperature corresponding to the temperature required to activate the trigger. The blowing agent may comprise a chemical which has a suitably low decomposition temperature and which releases a gas on decomposition, such as an azide (which releases nitrogen), or a vaporizable liquid. In either case, whether the energizing fluid source is compressed air or a blowing agent, the pressure required to drive the piston 24 is about 2 Atmospheres. A vaporizable liquid such heptane or water has a sufficiently low boiling point that it will easily develop a vapour pressure of that magnitude. The driver arrangement 16 is actuated by the thermally activatable trigger 20, which is shown in Figure 1 as a fusible plug inserted between the energizing fluid source 28 and the cylinder 22, within a conduit 30, as can be more clearly seen in Figure 7. When the thermally activatable trigger 20 is heated above its melting point it allows the energizing fluid to enter the cylinder 22. A suitable trigger will have an activation temperature, somewhat above the maximum storage temperature, but well below the activation temperature of the payload if that is heat-activated. Other configurations of the conduit 30 and the plug 20 are possible, but it is desirable that the trigger gives a rapid release of pressure into the expansible chamber to provide the maximum impulse to the piston.

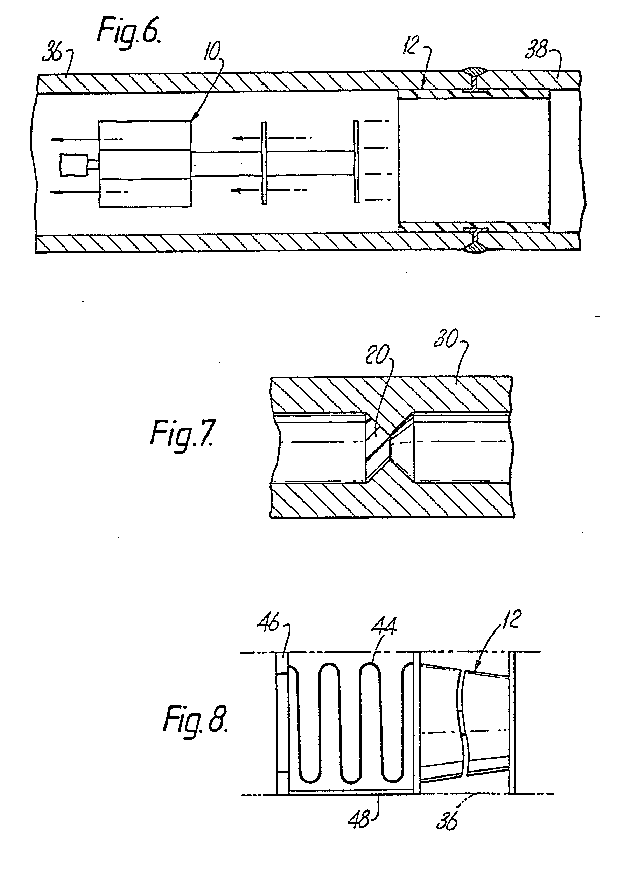

The driver arrangement 16 is supported by the support arrangement 18, as can be more clearly seen in Figures 3, 4 and 5. The support arrangement 18 comprises a plurality of radially extending fins which are secured by flanges 32 to the cylinder 22. These fins are optimally three in number, to ensure centering and to minimize the mass of the device. The fins 18 are further supplemented by foldable flap portions 34, which are clearly shown in Figures 3, 4 and 5 securing the entire device 10 in pipe section 36. The support arrangement 18 securely holds the driver arrangement 16 during travel of the carrier 14 to its predetermined location, which in this instance is the weld joining pipe sections 36 and 38. The weld junction between pipe sections 36 and 38 has been supplemented with a back-up ring 42, which provides a partial obstacle to movement of the carrier 14. It is also shown in Figures 3—5 that the vicinity of the weld area contains welding debris 40. The weld debris 40, as shown in Figure 4, may be cleaned by a cleaning member 41 carried on the face of the carrier 14. The cleaning member 41 may comprise a brushlike member or the like which will aid in preparation of the pipe walls in the vicinity of the pre-determined location.

Figure 5 illustrates the device 10 wherein the driver arrangement 16 has fully extended.

It can be seen somewhat schematically in Figures 3 to 5 that an energizing fluid source has in fact expanded the driver after the thermally activated trigger has melted.

Figure 6 illustrates that the device 10 may be destructible after operation. Destructible as used herein includes distortable, dissolvable, dispersable, friable, frangible, and otherwise degradable so that the device may be removed from the interior of the pipe after operation by the application of heat, air pressure or by water flow. It is important, however, that even a destructible device should be capable of prolonged storage under adverse temperature and humidity conditions.

Among suitable materials for a destructible device in accordance with the present invention may be mentioned, by way of example only, the following: distortable materials — natural and synthetic rubbers; dissolvable or dispersable materials — hydroxyalkyl cellulose, polyvinyl alcohol, paper products with soluble glues; friable or frangible materials — cardboard, paper pulp, rigid foams (especially those containing a high-temperature blowing agent); vaporizable materials — thermally depolymerizable materials such as poly (alpha-methyl styrene), polyacetals, irradiated polymers; flushable materials (for the energizing fluid source chamber) — polyethylene, polymers of low gas permeability.

The carrier 14 may also perform additional shielding functions both as a shield from, for example, the heat generated in the weld area when the device is positioned as in Figure 3, and also in general as a wind barrier from wind in the pipes. The carrier 14 may further serve to hold the payload in alignment during operation. For example, when the payload comprises an expandable pipe liner device, the carrier 14 may serve to align it during expansion.

Although cardboard parts will, in general, have adequate heat resistance, they (or any polymeric parts desired) may have a metallic coating applied to provide further resistance.

Figure 8 discloses in schematic fashion the first alternative embodiment of the device, wherein the driver arrangement comprises a compressed spring-like member 44. The spring-like member 44 is retained in compression by a compression retainer shown as collar 46 (which is connected to the inner wall of the pipe) and a trigger in the form of a clip 48 made from a thermoplastic or low-melting metallic alloy, which melts and fractures to release the spring-like member 44.

It is also possible to use one or more tensioned spring-like members (not shown). These members would be retained in tension by a mechanical tension retainer much as the member 44 in Figure 8 is held in compression. Bands of elastomeric material, which may be heat-recoverable, will be especially suitable.

Figure 9 discloses a second alternative embodiment of the device utilizing a driver arrangement which is an expansible chamber in the form of a rolling diaphragm chamber 50 and energizing fluid source 28. The rolling diaphragm chamber 50 is secured to the inside of the pipe by a support in the form of a retention collar 52. The energizing fluid source 28 communicates with the rolling diaphragm chamber 50 via a thermally activatable trigger 20 shown by way of example as a wax plug.

Figure 10 illustrates a third alternative embodiment of the device utilizing a driver arrangement in the form of an expansible chamber and specifically in the form of a tubular bellows 54, which is supported by a retention ring 56, and is connected to energizing fluid source 28 via wax plug 20. A similar embodiment (not depicted in the drawing) may comprise an expansible chamber in the form of a balloon, where limitation on expansion either by the pipe wall or by a cylinder inside which the balloon is placed converts the volume expansion to a linear extension, moving the carrier into position.

Figure 11 illustrates a fourth alternative embodiment of the device wherein the driver arrangement comprises another compressed spring-like member in the form of rolling diaphragm chamber 58 which is retained by a compression retention device 60, much as the spring-like member 44 is retained by the fusible clip 48 in Figure 8. The rolling diaphragm chamber 58 is a sealed chamber which contains, in the configuration of Figure 11, a pressurized fluid which will expand the chamber once released by the compression retention device 60. The compression retention device 60 will melt on heating of the pipe wall.

Figure 12 illustrates a fifth alternative embodiment of the device, similar to the device shown in Figure 11, wherein the driver arrangement comprises a tubular bellows 64 containing a fluid under pressure, said pressure being maintained by a support in the form of a collar 66 attachable to the inside of the pipe and a thermoplastic collar 68 which fractures or is thermally activated upon heating of the pipe wall.

Though the embodiments of Figures 8 to 12 have been depicted as being supported within the pipe generally be a collar-like support, it is envisaged that they may be supported by a support such as is illustrated in detail in Figures 1—5. Conversely, it is possible that the driver arrangement of the embodiments of Figures 1—5 may be supported by a simpler support. It is also envisaged that the driver arrangement may expand radially as in the case of a balloon-like chamber to contact the inside wall of a pipe for support. Indeed, the choice of support will depend much on the pipe diameter and the payload mass, and may be of any appropriate form.

While the specification has referred extensively to positioning a payload near a pipe weld, it should be understood that the device of the invention is of general application to the placement of a payload within an inaccessible pipe by thermal activation.

## Claims

1. A device (10) for operation within a pipe comprises: carrier means (14) for radially and axially supporting a payload (12); driver means (16) connected to said carrier means for effecting movement of the carrier axially within the pipe, the driver means being axially extensible; support means connected to the driver means to support the driver means within the pipe; and thermally activatable trigger means (20) connected to the driver means to actuate said driver means to move the carrier and deliver the payload to a predetermined location within the pipe.

2. A device according to claim 1, wherein said carrier means (14), driver means (16), support means (18) and trigger means (20) are arrnged to be destructible after delivery of the payload to the predetermined location.

3. A device according to claim 1 or 2, wherein the driver means comprises an expansible chamber and an energizing fluid source (28) interconnected by said thermally activatable trigger means.

4. A device according to claim 3, wherein the energizing fluid source (28) comprises a chamber of compressed gas.

5. A device according to claim 3 or 4, wherein the energizing fluid source comprises a chamber containing a blowing agent.

6. A device according to any of claims 3 to 5, wherein said expansible chamber comprises a telescopic cylinder (22) and a complementary piston (24).

7. A device according to any of claims 3 to 5, wherein the expansible chamber comprises a rolling diaphram chamber (50), or a tubular bellows (54).

8. A device according to claim 1 or 2, wherein the driver means comprises a compressed spring-like member (44) and the thermally activatable trigger means comprises a compression retainer (48).

9. A device according to claim 8, wherein the compressed spring-like member comprises a sealed telescopic cylinder and a complementary piston.

10. A device according to claim 8, wherein the compressed spring-like member comprises a sealed rolling diaphram chamber (58), or a sealed tubular bellows (64), or a generally helical spring.

11. A device according to claim 1 or 2, wherein the driver means comprises a tensioned spring-like member and the thermally activatable trigger means comprises a tension retainer.

## Revendications

1. Un dispositif (10) conçu pour fonctionner à l'intérieur d'un conduit, comprenant, des moyens (14) porteurs pour porter une charge utile (12) radialement et axialement; des moyens d'entraînement (16) assemblés auxdits moyens porteurs pour provoquer le déplacement du porteur axialement à l'intérieur du conduit, les moyens d'entraînement étant axialement extensibles; des moyens supports assemblés aux moyens d'entraînement pour porter les moyens d'entraînement à l'intérieur du conduit; et des moyens de déclenchement (20) actionnables thermiquement assemblés aux moyens d'entraînement pour actionner les moyens d'entraînement de façon qu'ils déplacent le porteur et amènent la charge utile à un emplacement prédéterminé à l'intérieur du conduit.

2. Un dispositif selon la revendication 1, dans lequel les moyens (14) porteurs, les moyens d'entraînement (16), les moyens supports (10) et les moyens de déclenchement (20) sont agencés de manière à être destructibles après fourniture de la charge utile à l'emplacement prédéterminé.

3. Un dispositif selon la revendication 1 ou 2, dans lequel les moyens d'entraînement comprennent une chambre expansible et une source (28) de fluide moteur reliées entre elles par les moyens de déclenchement actionnables thermiquement.

4. Un dispositif selon la revendication 3, dans lequel la source (28) de fluide moteur comprend une chambre de gaz comprimé.

5. Un dispositif selon la revendication 3 ou 4, dans lequel la source de fluide moteur comprend une chambre contenant un agent de soufflage.

6. Un dispositif selon l'une quelconque des revendications 3 à 5, dans lequel ladite chambre expansible comprend un cylindre télescopique (22) et un piston complémentaire (24).

7. Un dispositif selon l'une quelconque des revendications 3 à 5, dans lequel la chambre expansible est une chambre (50) à diaphragme roulant ou un soufflet tubulaire (54).

8. Un dispositif selon la revendication 1 ou 2, dans lequel les moyens d'entraînement comprennent un organe (44) du type ressort comprimé et les moyens de déclenchement actionnables thermiquement comprennent un organe (48) de retenue en compression.

9. Un dispositif selon la revendication 8, dans lequel l'organe du type ressort comprimé comprend un cylindre télescopique scellé et un piston complémentaire.

10. Un dispositif selon la revendication 8 dans lequel l'organe du type ressort comprimé comprend une chambre à diaphragme roulant scellée (58) ou un soufflet tubulaire scellé (64) ou un ressort de forme générale hélicoïdale.

11. Un dispositif selon la revendication 1 ou 2, dans lequel les moyens d'entraînement comprennent un organe du type ressort tendu et les moyens de déclenchement actionnable thermiquement comprennent un organe de retenue en tension.

## Patentansprüche

1. Vorrichtung (10) für den Einsatz innerhalb eines Rohrs mit einem Träger (14) zum radialen und axialen Halten einer Nutzlast (12), einem mit dem Träger verbundenen Antriebsorgan (16) zum Herbeiführen einer Axialbewegung des Trägers innerhalb des Rohrs, wobei das Antriebsorgan in axialer Richtung ausfahrbar ist, einer mit dem Antriebsorgan verbundenen Halterung, um das Antriebsorgan innerhalb des Rohrs zu haltern, und einem mit dem Antriebsorgan verbundenen, thermisch aktivierbaren Auslöser (20) zur Betätigung des Antriebsorgans zwecks Bewegung des Trägers und Zuführung der Nutzlast zu einem vorbestimmten Ort innerhalb des Rohrs.

2. Vorrichtung nach Anspruch 1, bei welcher der Träger (14), das Antriebsorgan (16), die Halterung (18) und der Auslöser (20) nach der Zufuhr der Nutzlast zu dem vorbestimmten Ort zerstörbar ausgebildet sind.

3. Vorrichtung nach Anspruch 1 oder 2, bei welcher das Antriebsorgan eine ausdehnbare Kammer und eine Energiefluidquelle (28) aufweist, die durch den thermisch aktivierbaren Auslöser miteinander in Verbindung stehen.

4. Vorrichtung nach Anspruch 3, bei welcher die Energiefluidquelle (28) eine Druckgaskammer aufweist.

5. Vorrichtung nach Anspruch 3 oder 4, bei welcher die Energiefluidquelle eine Kammer aufweist, die ein Treibmittel enthält.

6. Vorrichtung nach jedem der Ansprüche 3 bis 5, bei welcher die ausdehnbare Kammer einen Teleskopzylinder (22) und einen komplementären Kolben (24) aufweist.

7. Vorrichtung nach jedem der Ansprüche 3 bis 5, bei welcher die ausdehnbare Kammer eine Rollmembrankammer (50) oder einen rohrförmigen Balg (54) aufweist.

8. Vorrichtung nach Anspruch 1 oder 2, bei welcher das Antriebsorgan ein druckfederartiges Element (44) und der thermisch aktivierbare Auslöser einen Druckrückhalter (48) aufweist.

9. Vorrichtung nach Anspruch 8, bei welcher das druckfederartige Element einen geschlossenen Teleskopzylinder und einen komplementären Kolben aufweist.

10. Vorrichtung nach Anspruch 8, bei welcher das druckfederartige Element eine geschlossene Rollmembrankammer (58) oder einen geschlossenen rohrförmigen Balg (64) oder eine im allgemeinen schraubenfederartige Feder aufweist.

11. Vorrichtung nach Anspruch 1 oder 2, bei welcher das Antriebsorgan ein zugfederartiges Element und der thermisch aktivierbare Auslöser einen Zugrückhalter aufweist.

# Fig.1.

Fig.2.

0 045 628

2

**Fig.3.**

**Fig.4.**

**Fig.5.**

**Fig.6.**

**Fig.7.**

**Fig.8.**

Fig.9.

Fig.10.

Fig.11.

Fig.12.